Europäisches Patentamt

European Patent Office

Office européen des brevets

(19)

(11) **EP 1 109 337 A2**

(12) **EUROPEAN PATENT APPLICATION**

(43) Date of publication:
**20.06.2001 Bulletin 2001/25**

(51) Int Cl.$^7$: **H04B 10/18**

(21) Application number: **00126871.3**

(22) Date of filing: **07.12.2000**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.12.1999 JP 35830799**

(71) Applicants:
• **DDI Corporation**
**Tokyo (JP)**
• **KDD Submarine Cable Systems Inc.**
**Tokyo (JP)**

(72) Inventors:
• **Tanaka, Hideaki c/o KDD R&D Laboratories Inc.**
**Saitama (JP)**

• **Usami, Masashi c/o KDD R&D Laboratories Inc.**
**Saitama (JP)**
• **Tanaka, Shinsuke**
**c/o KDD R&D Laboratories Inc.**
**Saitama (JP)**

(74) Representative: **Schaumburg, Thoenes & Thurn**
**Postfach 86 07 48**
**81634 München (DE)**

Remarks:
A request for correction of p.8 of the description has been filed pursuant to Rule 88 EPC. A decision on the request will be taken during the proceedings before the Examining Division (Guidelines for Examination in the EPO, A-V, 3.).

(54) **Chromatic dispersion compensator, optical receiver and optical receiving terminal**

(57)    An chromatic dispersion compensator according to the invention is composed of a wavelength converter for converting a wavelength of a lightwave carrying an input signal into a conversion wavelength, a wavelength dispersion medium for giving different chromatic dispersion according to each wavelength to optical signal of the conversion wavelength output from the wavelength converter, a photodetector for converting optical signal of the conversion wavelength output from the chromatic dispersion medium into an electric signal, and a controller for controlling the conversion wavelength for a predetermined component in the output of the photodetector. In optical receivers, input signal light is transmitted through the above chromatic dispersion compensator and then demodulated into a data. In an optical receiving terminal, a wavelength demultiplexer demultiplexes wavelength division multiplexed optical signals input from an optical transmission line into predetermined individual wavelengths, and the above chromatic dispersion compensator is disposed at one of the optical receivers which respectively processes the optical signals of the wavelengths demultiplexed by the wavelength demultiplexer.

FIG. 1

EP 1 109 337 A2

**Description**

FIELD OF THE INVENTION

This invention relates to a chromatic dispersion compensator, an optical receiver and an optical receiving terminal, and more specifically, to a chromatic dispersion compensator, an optical receiver and an optical receiving terminal for automatically compensating or adjusting chromatic dispersion occurred in optical fiber transmission into an optimum value.

BACKGROUND OF THE INVENTION

As the Internet becomes widespread, the demand for a larger transmission capacity has been increasing without stopping. Optical fiber communication is suitable for the large capacity transmission; especially a wavelength division multiplexing (WDM) transmission system for transmitting a plurality of optical signals having mutually different wavelengths on a single optical fiber has been attracting a great deal of attention. In the WDM system, the transmission capacity can be easily enlarged by increasing the number of multiplexed wavelengths and/or increasing the modulation rate of each optical signal.

In a long haul optical fiber communication system, an optical repeating amplifier transmission system is employed in which an optical amplifier compensates a transmission loss of an optical fiber. In such optical repeating amplifier transmission system, a wavelength band applicable to the transmission becomes narrower proportional to the number of the optical amplifiers to be used. So, such dense wavelength multiplexing system has been noticed that disposes signal wavelengths as many as possible in the same wavelength bandwidth by reducing wavelength intervals.

In regard to a signal form, a return-to-zero signal (RZ signal) is regarded as most suitable since its receiving sensitivity improves and its cross phase modulation effect decreases in the wavelength multiplexing transmission.

An optical fiber has chromatic dispersion; the chromatic dispersion is accumulated due to the long haul transmission and deteriorates a waveform of optical signal. Generally, the accumulated chromatic dispersion is almost removed by disposing fibers, i.e. dispersion compensating fibers, having the chromatic dispersion reverse to the accumulated chromatic dispersion periodically on the optical fiber transmission line and in a receiving terminal. This operation is called chromatic dispersion compensation. The difference between the accumulated chromatic dispersion amount on the optical fiber transmission line and the dispersion compensating amount at the receiving terminal, namely the accumulated chromatic dispersion remained after the dispersion compensation at the receiving terminal is called residual dispersion. The range of the residual dispersion to be allowed regarding the deterioration of transmission characteristics is called a dispersion window. The dispersion window becomes narrower as the modulation rate increases, e.g. it becomes ±400 ps/nm with a 5 Gbit/s signal, ±100 ps/nm with a 10 Gbit/s signal, and ±25 ps/nm with a 20 Gbit/s signal.

On the other hand, the chromatic dispersion amount of the optical fiber varies in relation to the temperature. Its coefficient is approximately $2 \times 10^{-3}$ ps/nm/km/K. When the temperature varies by 30 degree during a 500-km transmission, the chromatic dispersion shifts approximately by 30 ps/nm and, as a result, the transmission characteristics deteriorate at a transmission rate of 20 Gbit/s or more.

As a method for suppressing the deterioration of the transmission characteristics, a configuration is proposed in which a clock component of optical signal is extracted at a receiving side, and an oscillating wavelength of a laser light source at a transmitting side is controlled such that the intensity of the clock component becomes the maximum□ ($24^{th}$ European Conference on Optical Communication, pp. 519-520). With this configuration, the signal wavelength is automatically controlled so that the accumulated wavelength dispersion amount on the optical transmission line stays within the dispersion window.

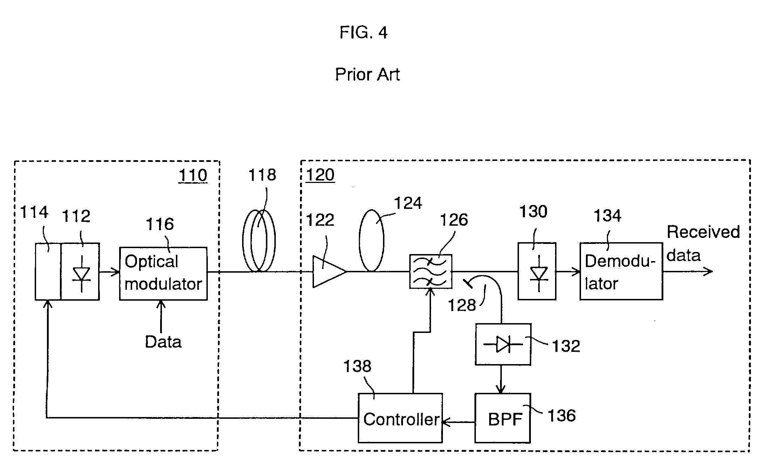

This configuration is explained below with reference to FIG. 4. An optical transmitting terminal 110 is composed of a laser light source 112, a resonator 114 for determining a laser oscillating wavelength of the laser light source 112, and an optical modulator 116 for RZ-modulating output light from the laser light source 112 with a data of 40 Gb/s. The laser light source 112 laser-oscillates at the wavelength determined by the resonator 114, and CW output laser light from the laser light source 112 is applied to the optical modulator 116. The optical modulator 116 RZ-modulates the CW laser light from the laser light source 112 with a data of 40 Gb/s and sends the modulated light to an optical fiber transmission line 118.

Although the optical fiber transmission line 118 is symbolically illustrated as if it is composed of an optical fiber, it is actually composed of a plurality of optical fibers, a plurality of optical repeating amplifiers disposed at regular intervals, and a plurality of dispersion compensating fibers disposed at regular intervals.

The signal light propagated on the optical fiber transmission line 118 enters an optical receiving terminal 120. In the optical receiving terminal 120, an optical amplifier 122 optically amplifies the signal light from the optical fiber transmission line 118. Out put light of the optical amplifier 122 enters an optical coupler 128 via a dispersion compensating fiber 124 having a constant chromatic dispersion value and an optical filter 126 for transmitting only the light having the same wavelength with the oscillating wavelength of the laser light source 112. The optical filter 126 is disposed in order to remove noise light except for the signal light.

The optical coupler 128 applies most of the output light of the optical filter 126 to a photodetector 130 and the rest to a photodetector 132. The photodetector 130 outputs an electric signal according to the input light intensity. A demodulating circuit 134 demodulates the transmission data from the output of the photodetector 130 and outputs the data.

The photodetector 132 also outputs an electric signal according to the input optical intensity. Since the photodetector 132 is disposed in order to extract a clock component of the transmission signal, the branching ratio of the optical coupler 128 and the response rate of the photodetector 132 to be required are only to an extent for extracting the clock component. An electrical bandpass filter (BPF) 136 extracts the 40 Gb/s component, i.e. the clock frequency component from the output of the photodetector 132 and applies it to a control circuit 138. The control circuit 138 controls the resonant wavelength of the outside resonator 114 of the transmitting terminal 110 so that the output voltage of the BPF 136 becomes the maximum, and at the same time controls the transmission wavelength of the optical filter 126 so that the optical filter 126 transmits the same wavelength component with the resonant wavelength.

The accumulated chromatic dispersion of the optical fiber transmission line 118 varies according to the signal wavelength. So, by controlling the signal wavelength with the above way, the accumulated chromatic dispersion of the signal light is automatically controlled to be the optimum regardless to the temperature fluctuation.

However, this configuration is not applicable to a wavelength division multiplexing system, especially to a dense wavelength division multiplexing system. Since each signal wavelength varies in its own way regardless to other wavelengths, the wavelength intervals fluctuate and also the transmission characteristics greatly deteriorate due to the crosstalk. When the wavelength intervals are set considering the wavelength fluctuation, it ends up by setting the intervals wider than they really should be. Consequently, the dense wavelength division multiplexing system can not possibly be constructed.

SUMMARY OF THE INVENTION

It is therefore an object of the present invention to provide a chromatic dispersion compensator, an optical receiver and an optical receiving terminal overcoming the aforesaid inconvenience.

Another object of the invention is to provide a chromatic dispersion compensator, an optical receiver and an optical receiving terminal applicable to a dense wavelength division multiplexing transmission.

A further object of the invention is to provide a chromatic dispersion compensator, an optical receiver and an optical receiving terminal for automatically controlling chromatic dispersion of a signal to be the optimum value without changing a signal wavelength on an optical transmission line.

An chromatic dispersion compensator according to the invention is composed of a wavelength converter for converting a wavelength of a lightwave carrying an input signal into a conversion wavelength, a wavelength dispersion medium for giving different chromatic dispersion according to each wavelength to optical signal of the conversion wavelength output from the wavelength converter, a photodetector for converting optical signal of the conversion wavelength output from the chromatic dispersion medium into an electric signal, and a controller for controlling the conversion wavelength for a predetermined component in the output of the photodetector.

In optical receivers according to the invention, input signal light is transmitted through the above chromatic dispersion compensator and then demodulated into a data.

In an optical receiving terminal according to the invention, a wavelength demultiplexer demultiplexes wavelength division multiplexed optical signals input from an optical transmission line into predetermined individual wavelengths, and the above chromatic dispersion compensator is disposed at one of the optical receivers which respectively processes the optical signals of the wavelengths demultiplexed by the wavelength demultiplexer.

In such chromatic dispersion compensator having the aforementioned configuration, the controller controls the conversion wavelength of the wavelength converter so that the predetermined component, e.g. the clock component, in the output of the photodetector becomes the optimum, e.g. the maximum. With this operation, the conversion wavelength is automatically controlled to become such wavelength that the wavelength dispersion medium gives the chromatic dispersion to make the transmission characteristics the optimum. Consequently, the accumulated chromatic dispersion of the input signal is automatically compensated to the optimum value. Since the wavelength on the optical transmission line is not changed, the dense WDM transmission becomes possible as well as the wavelength demultiplexing at the optical receiving terminal becomes easier. Also, since the wavelength of the signal carrier is converted after the wavelength demultiplexing, the conversion wavelength can be set to a wavelength independently from the carrier wavelengths of other optical signals. The design of the optical receiver, therefore, becomes much freer, and also it becomes possible to use the optical receivers with the same configuration for the respective signals. This means to drastically cut down the maintenance expenses.

For example, the wavelength converter is composed of a probe light source which can vary a wavelength of probe light and a wavelength converting element for converting a carrier wavelength of the input signal into the conversion wavelength by using the interaction between the probe light output from the probe light source and the lightwave carrying the input signal. The wavelength converting element has for instance a nonlinear optical element with the parametric oscillation. This configuration makes it possible to convert the wavelength of the signal carrier into a desired value with a small-sized structure.

Furthermore, an optical filter for extracting light of the conversion wavelength is disposed either before or behind of the chromatic dispersion medium, and the controller controls the transmission center wavelength of the optical filter in connection with the control of the conversion wavelength. The optical filter removes unnecessary wavelength components.

The predetermined component is preferably a signal clock component. A bandpass filter for extracting the clock component from the output of the photodetector may be provided. Such filter is realized with a simple configuration.

## BRIEF DESCRIPTION OF THE DRAWING

The above and other objects, features and advantages of the present invention will be apparent from the following detailed description of the preferred embodiments of the invention in conjunction with the accompanying drawings, in which:

FIG. 1 shows a schematic block diagram of a first embodiment according to the invention;
FIG. 2 is a schematic diagram showing the wavelength dependency of the chromatic dispersion amount in a chromatic dispersion compensating fiber;
FIG. 3 is a schematic diagram showing the dispersion compensating amount dependency of the transmission characteristics and the intensity of a clock component; and
FIG. 4 shows a schematic block diagram of prior art.

## DESCRIPTION OF THE PREFERRED EMBODIMENT

Embodiments of the invention are explained below in detail with reference to the drawings.

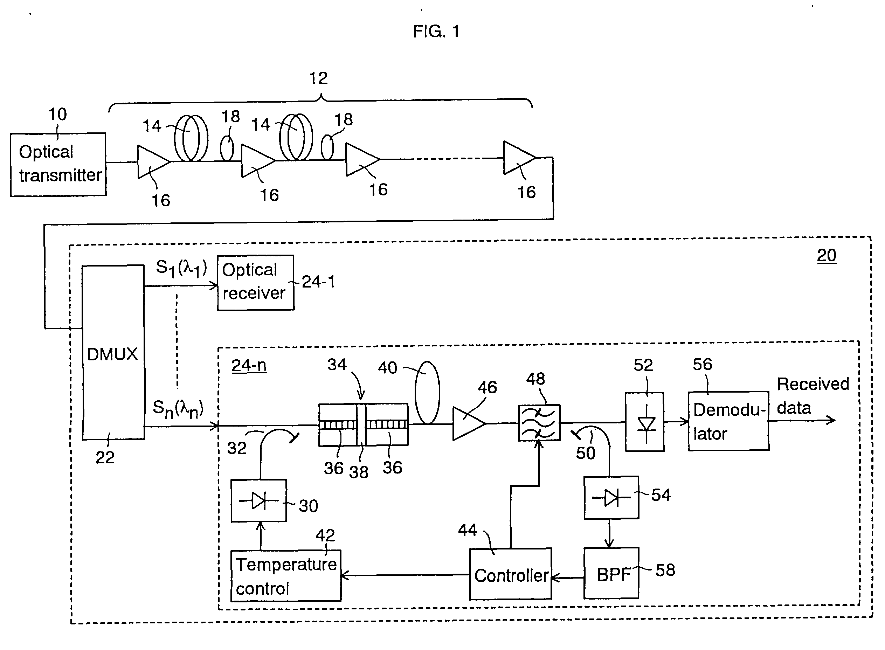

FIG. 1 shows a schematic block diagram of a first embodiment according to the invention. An optical transmitting terminal 10 superimposes signals $S_1 \sim S_n$ on wavelengths $\lambda_1 \sim \lambda_n$ which are different from each other, wavelength-multiplexes those optical signals $S_1 (\lambda_1) \sim S_n (\lambda_n)$ and outputs the multiplexed signals onto an optical transmission line 12. $S_i(\lambda_j)$ means that a signal $S_i$ is carried by light of a wavelength $\lambda_j$ and expresses the light of the wavelength $\lambda_j$ carrying the signal $S_i$. The respective signals $S_1 \sim S_n$ are for example composed of RZ signals with a transmission rate of 40 Gb/s. The optical transmission line 12 is composed of a plurality of optical transmission fibers 14, a plurality of optical amplifiers 16 and a plurality of dispersion compensating fibers 18. The dispersion compensating fibers 18 are disposed at appropriate intervals, at every repeating span in FIG. 1. The optical signals $S_1 (\lambda_1) \sim S_n (\lambda_n)$ propagated on the optical transmission line 12 enter an optical receiving terminal 20.

In the optical receiving terminal 20, a wavelength demultiplexer 22 demultiplexes the optical signals $S_1 (\lambda_1) \sim S_n (\lambda_n)$ input from the optical transmission line 12 into the respective wavelengths $\lambda_1 \sim \lambda_n$ and sends them to optical receivers 24-1~24-n. The wavelength demultiplexer 22 is for example composed of an arrayed waveguide grating. The configurations of the respective optical receivers 24-1~ 24-n are basically the same. In FIG. 1, although the interior structure of the optical receiver 24-n alone is illustrated, the other optical receivers also have basically the same structure with that of the optical receiver 24-n.

The configuration and operation of the optical receiver 24n are explained below. A DFB laser 30 laser-oscillates in a single longitudinal mode at a wavelength (to be expressed as $\lambda_p$) to be approximately half of the wavelength $\lambda_n$ of the input optical signal $S_n (\lambda_n)$. A WDM optical coupler 32 couples the output light (probe light) from the DFB laser 30 with the optical signal $S_n (\lambda_n)$ from the wavelength demultiplexer 22 and applies the coupled light into a wavelength converter 34.

The wavelength converter 34 is an apparatus for converting the wavelength $\lambda_n$ carrying the signal $S_n$ into another wavelength. In the embodiment, the wavelength $\lambda_n$ carrying the signal $S_n$ is converted into a wavelength $\lambda_c$ to be determined by $\lambda_n$ and $\lambda_p$ using the parametric oscillation. The wavelength converter 34 is composed of a lithium niobate waveguide 36 which is periodically dielectric-polarized in its axis direction and a wave plate 38 which is inserted orthogonally to the waveguide 36 in the middle of the axis direction of the waveguide 36.

The substance that does not have a central symmetry structure has the quadratic nonlinear optical effect. When signal light of a wavelength $\lambda_s$ and probe light of a wavelength $\lambda_p$ different from the wavelength $\lambda_s$ are fed into such substance, light of a wavelength $\lambda_c$ is output which can be expressed as the following equation.

$$1/\lambda_c = 1/\lambda_p - 1/\lambda_s$$

This phenomenon is called the wavelength conversion by the parametric oscillation, and the light of the wavelength $\lambda_c$ is called difference frequency light.

When the following equation of a phase matching condition is fulfilled, the high conversion efficiency can be obtained; here, the effective refractive indices of the signal light, the probe light and the difference frequency light are expressed $n_s$, $n_P$ and $n_c$ respectively.

$$n_c \ /\lambda_c \ = \ n_p \ /\lambda_p \ \approx \ n_s \ /\lambda_s$$

However, since this condition is hardly fulfilled, in most cases, pseudo phase matching is employed in practice. The pseudo phase matching is realized by applying a strong electric field in order to generate polarization necessary for forming a structure with no central symmetry and disposing polarized areas and nonpolarized areas of the same interval alternatively in the same direction.

Under this pseudo phase matching condition, since the wavelength conversion occurs when the polarization of the input signal light coincides with that of the probe light, it is necessary to suppress the polarization dependency of the probe light when the polarization of the signal light is not stable. In the embodiment, therefore, a slit-like slot, which crosses the lithium niobate waveguide 36, is formed in the middle of the axis direction of the waveguide 36 and the wave plate 38, which is orientated through the uniaxial extension of polyimide, is inserted into the slot. The wave plate 38 functions as a half wave plate to the signal light and the difference frequency light converting the only remained TM polarization component of the signal light into a TE polarization as well as converting the TE polarization of the difference frequency light into the TM polarization. On the other hand, the wavelength of the probe light is approximately half of those of the signal light and the difference frequency light, and so the polarization of the probe light is not converted since the transmission of the wave plate 38 means the transmission of a plate with one wavelength for the probe light. The signal light transmitted the wave plate 38 becomes the TE polarization, and so the difference frequency light is generated through the interaction between the signal light and the probe light of the TE polarization. Since the difference frequency light generated in the front half part of the lithium niobate waveguide 36 is of the TM polarization, it is not involved in the wavelength conversion. As mentioned above, the wavelength converter 34 has characteristics for efficiently converting the wavelength of the light carrying the signal from $\lambda_s$ to $\lambda_c$ and also the characteristics have very little polarization dependency.

As readily understandable, in the wavelength converter 34, by changing the wavelength $\lambda_p$ of the probe light, namely the laser oscillation wavelength of the DFB laser 30, the wavelength $\lambda_c$ after the conversion can be changed.

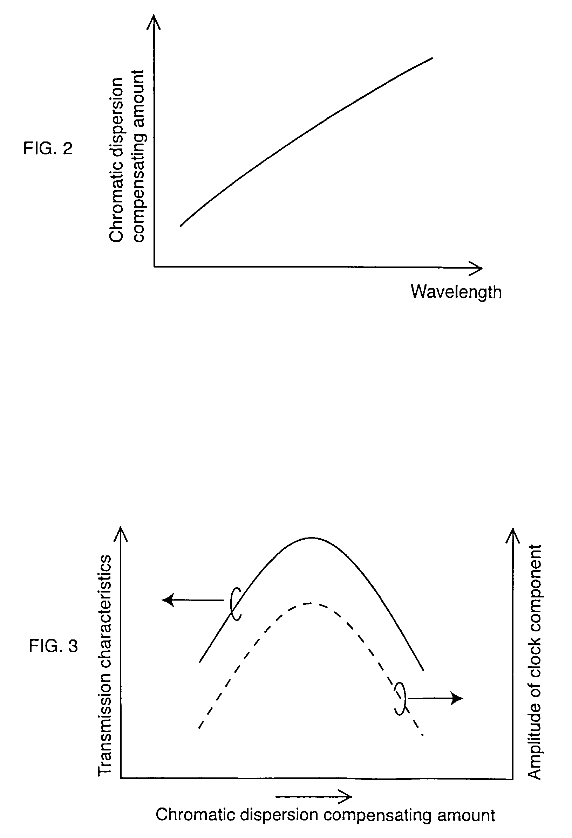

The light (including the optical signal $S_n$ ($\lambda_c$)) output from the wavelength converter 34 enters a dispersion compensating fiber 40. The dispersion compensating fiber 40 is composed of an element in which its chromatic dispersion monotonously varies proportional to the wavelength as shown in FIG. 2. The horizontal axis and the vertical axis in FIG. 2 express the wavelength and the dispersion compensation amount respectively. By adjusting the wavelength $\lambda_c$ of the optical signal $S_n$ ($\lambda_c$) output from the wavelength converter 34, in other words, by adjusting the wavelength $\lambda_p$ of the probe light input the wavelength converter 34, the dispersion compensation amount for the signal $S_n$ can be controlled. In the embodiment, the DFB laser 30 is placed on a Peltier element 42, and a control circuit 44 controls the oscillation wavelength $\lambda_p$ of the DFB laser 30 by adjusting the temperature of the DFB laser 30 with the Peltier element 42.

The output light of the dispersion compensating fiber 40 is optically amplified by an optical amplifier 46 and enters an optical bandpass filter 48. The control circuit 44 controls the transmission center wavelength of the optical bandpass filter 48 by connecting with the Peltier element 42 so that the optical band pass filter transmits only the wavelength conversion light (wavelength $\lambda_c$) component output from the wavelength converter 34. Although the optical amplifier 46 can be also disposed after the optical filter 48, it is preferable to be disposed before the optical filter 48 when the signal level is considered. The output light of the optical bandpass filter 48 is practically composed of the optical signal $S_n$ ($\lambda_c$).

An optical coupler 50 applies most of the output light from the optical filter 48 to a photodetector 52 and only a small portion of the output light to a photodetector 54. The photodetector 52 converts the input light into an electric signal and applies it to a demodulating circuit 56. The demodulating circuit 56 demodulates the transmission data from the electric signal output from the photodetector 52.

The photodetector 54 converts the input light from the optical coupler 52 into an electric signal. An electric bandpass filter (BPF) 58 extracts the clock frequency component of the transmitted RZ signal from the output of the photodetector 54. The control circuit 44 integrates the output of the BPF 58 to detect its amplitude and controls the oscillation wavelength $\lambda_p$ of the DFB laser 30 with the Peltier element 42 so as to increase the amplitude of the output from the BPF 58. Needless to say, the control circuit 44 controls the transmission center wavelength of the variable optical filter 48 to be the wavelength identical to the oscillation wavelength $\lambda_p$ of the DFB laser 30.

When the amplitude of the clock component of the received light becomes the maximum, it means that the accumulated chromatic dispersion of the optical signal is compensated to become the optimum dispersion value by the dispersion compensating fiber 40. FIG. 3 is a schematic diagram showing the variations of the transmission characteristics and the intensity of the clock component relative to the chromatic dispersion compensating amount. The horizontal axis expresses the chromatic dispersion compensating amount, the right vertical axis expresses the intensity of the clock component and the left vertical axis expresses the transmission characteristics. As shown in FIG. 3, the intensity of the clock component becomes the maximum when the transmission characteristics become the maximum.

So, when the signal wavelength is controlled to maximize the intensity of the clock component, the chromatic dispersion compensation is also optimized. In each of the optical receivers 24-1~24-n, therefore, the signal light inputs the photodetector 52 after its accumulated chromatic dispersion is compensated to the optimum value.

As mentioned above, in the embodiment, since a plurality of wavelength-multiplexed optical signals are divided into the respective optical signals and the wavelength of each optical signal is converted to the other wavelength so as to optimize the dispersion compensating value of the dispersion compensating fiber 40, a wavelength after the wavelength conversion can be determined without restriction. For instance, in all the optical receivers 24-1~24-n, the conversion wavelength $\lambda_c$ can be the same. With this configuration, the design of the optical receivers 24-1~24-n becomes much easier. Since the wavelength of the lightwave carrying each signal is not changed on the optical transmission line 12, the design and maintenance of the optical transmission line 12 become easier, and also the wavelength demultiplexing at the optical receiving terminal becomes easier.

In the embodiment shown in FIG. 1, the photodetector 54 is disposed for exclusively extracting the clock component from the received optical signal. However, it is also possible to extract the clock component by applying the output of the data receiving photodetector 52 to the electric BPF 58.

In the wavelength conversion using the parametric oscillation, the following waveguides are applicable besides the lithium niobate waveguide: a dielectric waveguide such as a lithium tantalate waveguide (LiTaO$_3$) and KTP (KTiOPO$_4$) waveguide, a semiconductor waveguide such as GaAs/AlGaAs system, silica glass waveguide, and a glass such as silica fiber, tellurite waveguide and tellurite fiber.

Besides the element using the quadratic nonlinear optical effect, an element using a cubic nonlinear optical effect can convert the wavelength of the optical signal and also can change the wavelength after the conversion by controlling the wavelength of the probe light or the pumping light.

As a dispersion compensating element having the similar function to the dispersion compensating fiber 40, there is an element obtained by combining a fiber Bragg grating which has different chromatic dispersion per wavelength and an optical circulator. The same operation effect can be obtained by using such element.

When the transmission signal is an NRZ signal, for example an NRZ signal of 40 Gb/s, a component of 80 GHz being twice as fast can be extracted. The oscillation wavelength of the DFB laser 30 and the transmission wavelength of the variable optical filter 48 should be controlled so as to maximize the amplitude of the obtained 80 GHz component.

In the embodiment shown in FIG. 1, the oscillation wavelength of the DFB laser 30 is changed by the Peltier element 42. However, it is also possible to change the oscillation wavelength by controlling the resonant wavelength of the outside resonator using the temperature or the pressure.

When a dispersion compensating element, which gives even greater dispersion compensating amount, is disposed between the wavelength demultiplexer 22 and the optical receivers 24-1~24-n and/or immediately in front of the photodetector 52, obviously the optical receiver can deal with even greater accumulated chromatic dispersion.

As readily understandable from the aforementioned, according to the invention, accumulated chromatic dispersion of each signal can be optimized in a WDM transmission system. That is, even an optical waveform extremely deteriorated because of the optically accumulated chromatic dispersion can be converted into the optimum state and can be divided or discriminated precisely into each bit. Since a signal wavelength is converted in an optical receiving terminal instead of being converted on an optical transmission line, the dense WDM transmission can be realized easily. Since the wavelength conversion is performed after the signal wavelength is demultiplexed into each wavelength in the optical receiving terminal, a wavelength after wavelength conversion can be selected without restriction, and thus the design and production of the optical receiver become easier.

While the invention has been described with reference to the specific embodiment, it will be apparent to those skilled in the art that various changes and modifications can be made to the specific embodiment without departing from the spirit and scope of the invention as defined in the claims.

**Claims**

1. A chromatic dispersion compensator comprising:

   a wavelength converter for converting a wavelength of a lightwave carrying an input signal into a conversion wavelength;
   a wavelength dispersion medium for giving different chromatic dispersion according to each wavelength to optical signal of the conversion wavelength output from the wavelength converter;
   a photodetector for converting optical signal of the conversion wavelength output from the wavelength dispersion medium into an electric signal; and
   a controller for controlling the conversion wavelength for a predetermined component in the output of the photodetector.

2. The chromatic dispersion compensator of claim 1 wherein the wavelength converter comprises a probe light source capable of changing a wavelength and a wavelength converting element for converting a carrier wavelength of the input signal into the conversion wavelength by using the interaction between probe light output from the probe light source and a lightwave carrying the input signal.

3. The chromatic dispersion compensator of claim 1 or 2 wherein the wavelength converting element comprises a nonlinear optical element with the parametric oscillation.

4. The chromatic dispersion compensator of claim 1, 2 or 3 further comprising an optical filter disposed before or behind of the wavelength conversion medium for extracting the light of the conversion wavelength, and the transmission center wavelength of the optical filter being controlled by the controller in connection with the control of the conversion wavelength.

5. The chromatic dispersion compensator to anyone of claims 1 to 4 wherein the predetermined component comprises a signal clock component.

6. The chromatic dispersion compensator of claim 5 wherein the controller comprises a bandpass filter for extracting the clock component from the output of the photodetector.

7. An optical receiver comprising:

a wavelength converter for converting a wavelength of a lightwave carrying an input signal into a conversion wavelength;
a wavelength dispersion medium for giving different chromatic dispersion according to each wavelength to optical signal of the conversion wavelength output from the wavelength converter;
a photodetector for converting optical signal of the conversion wavelength output from the wavelength dispersion medium into an electric signal;
a controller for controlling the conversion wavelength for a predetermined component in the output of the photodetector; and
a demodulator for demodulating a received data from the output of the photodetector.

8. The optical receiver of claim 7 wherein the wavelength converter comprises a probe light source capable of changing a wavelength and a wavelength converting element for converting a carrier wavelength of the input signal into the conversion wavelength by using the interaction between probe light output from the probe light source and a lightwave carrying the input signal.

9. The optical receiver of claim 7 or 8 wherein the wavelength converting element comprises a nonlinear optical element with the parametric oscillation.

10. The optical receiver of claim 7, 8 or 9 further comprising an optical filter disposed before or behind of the wavelength dispersion medium for extracting the light of the conversion wavelength, the transmission center wavelength of the optical filter being controlled by the controller in connection with the control of the conversion wavelength.

11. The optical receiver of claim 7 wherein the predetermined component comprises a signal clock component.

12. The optical receiver of claim 11 wherein the controller comprises a bandpass filter for extracting the clock component from the output from the photodetector.

13. The optical receiver of anyone of claim 7 to 12 wherein the photodetector comprises an optical coupler for dividing the optical signal of the conversion wavelength output from the wavelength dispersion medium into two portions, a first photoelectric converter for converting one output from the optical coupler into an electric signal, the output of the first photoelectric converter being applied to the demodulator, and a second photoelectric converter for converting the other output light from the optical coupler into an electric signal, the output of the second photoelectric converter being applied to the controller.

14. An optical receiving terminal comprising a wavelength demultiplexer for demultiplexing wavelength division multiplexed optical signals input from an optical transmission line into predetermined individual wavelengths and a plurality of optical receivers for respectively processing the optical signals of the wavelengths demultiplexed by the wavelength demultiplexer wherein at least one of the plurality of the optical receivers comprising:

a wavelength converter for converting a wavelength of a lightwave carrying the input signal into a conversion wavelength;
a wavelength dispersion medium for giving a different chromatic dispersion according to each wavelength to optical signal of the conversion wavelength output from the wavelength converter;
a photodetector for converting optical signal of the conversion wavelength output from the wavelength dispersion medium into an electric signal;
a controller for controlling the conversion wavelength for a predetermined component in the output of the photodetector; and
a demodulator for demodulating a received data from the output of the photodetector.

15. The optical receiving terminal of claim 14 wherein the wavelength converter comprises a probe light source capable of changing a wavelength and a wavelength converting element for converting a carrier wavelength of the input signal into the conversion wavelength by using the interaction between probe light output from the probe light source and a lightwave carrying the input signal.

16. The optical receiving terminal of claim 14 or 15 wherein the wavelength converting element comprises a nonlinear optical element with the parametric oscillation.

17. The optical receiving terminal of claim 14, 15 or.16 further comprising an optical filter disposed before or behind of the wavelength converter for extracting the light of the conversion wavelength, the transmission center wavelength of the optical filter being controlled by the controller in connection with the control of the conversion wavelength.

18. The optical receiving terminal of anyone of claim 14 to 17 wherein the predetermined component comprises a signal clock component.

19. The optical receiving terminal of claim 18 wherein the controller comprises a bandpass filter for extracting the clock component from the output of the photodetector.

20. The optical receiving terminal of anyone of claim 14 to 19 wherein the photodetector comprises an optical coupler for dividing the optical signal of the conversion wavelength output from the wavelength dispersion medium into two portions, a first photoelectric converter for converting one output from the optical coupler into an electric signal, the output of the first photoelectric converter being applied to the demodulator, and a second photoelectric converter for converting the other output light from the optical coupler into an electric signal, the output of the second photoelectric converter being applied to the controller.

FIG. 1

FIG. 2

FIG. 3

FIG. 4

Prior Art